(19) Europäisches Patentamt European Patent Office Office européen des brevets

(11) **EP 4 474 871 A1**

(12) **EUROPEAN PATENT APPLICATION**
published in accordance with Art. 153(4) EPC

(43) Date of publication:
**11.12.2024 Bulletin 2024/50**

(21) Application number: **22940204.5**

(22) Date of filing: **28.04.2022**

(51) International Patent Classification (IPC):
**G01S 19/07** (2010.01) **G01S 5/14** (2006.01)

(52) Cooperative Patent Classification (CPC):
**G01S 5/14; G01S 19/07**

(86) International application number:
**PCT/JP2022/019217**

(87) International publication number:
**WO 2023/209927 (02.11.2023 Gazette 2023/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **FUKUSHIMA, Hirofumi**
  **Tokyo 100-8310 (JP)**
• **AMISHIMA, Takeshi**
  **Tokyo 100-8310 (JP)**
• **TAKAHASHI, Ryuhei**
  **Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **POSITION ORIENTATION DEVICE**

(57) A position orientation device according to the present disclosed technology includes a signal extracting unit (140) to individually extract a signal component ($r^n{}_{tar}$) from a target and a signal component ($r^n{}_{ref}$) from a reference wave source from a complex baseband signal ($r^n$), a reference orientation processing unit (150) to orient a position for the signal component ($r^n{}_{ref}$) from the reference wave source, a satellite-induced error calculating unit (160) to calculate an error component induced by a satellite on the basis of estimated position information of the reference wave source and a true value of a position where the reference wave source is present, and a target orientation processing unit (170) to orient a position of the target on the basis of the error component calculated by the satellite-induced error calculating unit (160) and the signal component ($r^n{}_{tar}$) from the target.

FIG. 1

EP 4 474 871 A1

## Description

TECHNICAL FIELD

The present disclosed technology relates to a position orientation device.

BACKGROUND ART

In position orientation of a radio wave source that performs satellite communication, there is a known method of performing position orientation by using information of a time difference of arrival (TDOA) and a frequency difference of arrival (FDOA) of signals after correlation processing between reception signals. This two-step conventional method using TDOA and FDOA is herein referred to as a two step geolocation (TSG) method.

In the position orientation of the radio wave source, a method different from the TSG method is also known. For example, Non-Patent Literature 1 discloses a direct geolocation (DG) method in which a target position is directly oriented from a reception signal using a maximum likelihood method. Non-Patent Literature 1 reports that the DG method is effective under a low SNR environment in which sufficient power is not obtained at the time of reception at a ground station as compared with the TSG method.

CITATION LIST

NON-PATENT LITERATURES

Non-Patent Literature 1: Weiss, A., Amar, A., "Direct Geolocation of Stationary Wide Band Radio Signal Based on Delays and Doppler Shifts," IEEE Workshop on Statistical Signal Processing, Aug. 31 - Sept. 3, 2009.

SUMMARY OF INVENTION

TECHNICAL PROBLEM

The DG method disclosed in Non-Patent Literature 1 does not take an influence of a delay time generated in the satellite and a frequency error generated at the time of frequency conversion (both are collectively referred to as "satellite-induced error") into consideration.

In view of the above problems, the present disclosed technology proposes a new position orientation method for reducing a satellite-induced error, a high-performance direct geolocation (HDG) method, in position orientation of a radio wave source according to a DG method.

SOLUTION TO PROBLEM

A position orientation device according to the present disclosed technology includes a signal extracting unit to individually extract a signal component ($r^n_{tar}$) from a target and a signal component ($r^n_{ref}$) from a reference wave source from a complex baseband signal ($r^n$), a reference orientation processing unit to orient a position for the signal component ($r^n_{ref}$) from the reference wave source, a satellite-induced error calculating unit to calculate an error component induced by a satellite on the basis of estimated position information of the reference wave source and a true value of a position where the reference wave source is present, and a target orientation processing unit to orient a position of the target on the basis of the error component calculated by the satellite-induced error calculating unit and the signal component ($r^n_{tar}$) from the target.

ADVANTAGEOUS EFFECTS OF INVENTION

Since the position orientation device according to the present disclosed technology has the above-described configuration, it is possible to implement position orientation by a new position orientation method that reduces a satellite-induced error.

BRIEF DESCRIPTION OF DRAWINGS

FIG. 1 is a block diagram illustrating a functional configuration of a position orientation device according to a first embodiment.

FIG. 2 is a block diagram illustrating a functional configuration of a reference orientation processing unit 150 in the position orientation device according to the first embodiment.

FIG. 3 is a block diagram illustrating a functional configuration of a target orientation processing unit 170 in the position orientation device according to the first embodiment.

FIG. 4 is a flowchart illustrating an example of a processing step of the position orientation device according to the first embodiment.

FIG. 5 is a block diagram illustrating an example of a hardware configuration of the position orientation device according to the first embodiment.

FIG. 6 is a block diagram illustrating a functional configuration of a position orientation device according to a second embodiment.

FIG. 7 is a flowchart illustrating an example of a processing step of the position orientation device according to the second embodiment.

DESCRIPTION OF EMBODIMENTS

In general, the term "orientation" is translated into English as "orientation". The term "orientation" is used, for example, in the technical field of photogrammetry. In photogrammetry, "orientation" refers to processing of obtaining a position and an attitude of a camera at the time of photographing using a principle that a light beam travels straight. "Orientation" means "an angle or a position of an object, or a direction in which the object is directed" in a dictionary. A position orientation device according to the present disclosed technology is a communication device that performs satellite communication, that is, a device that calculates a position of a radio wave source. In the present specification, the term "position orientation" is used as calculation of the position of the radio wave source as a target.

First Embodiment

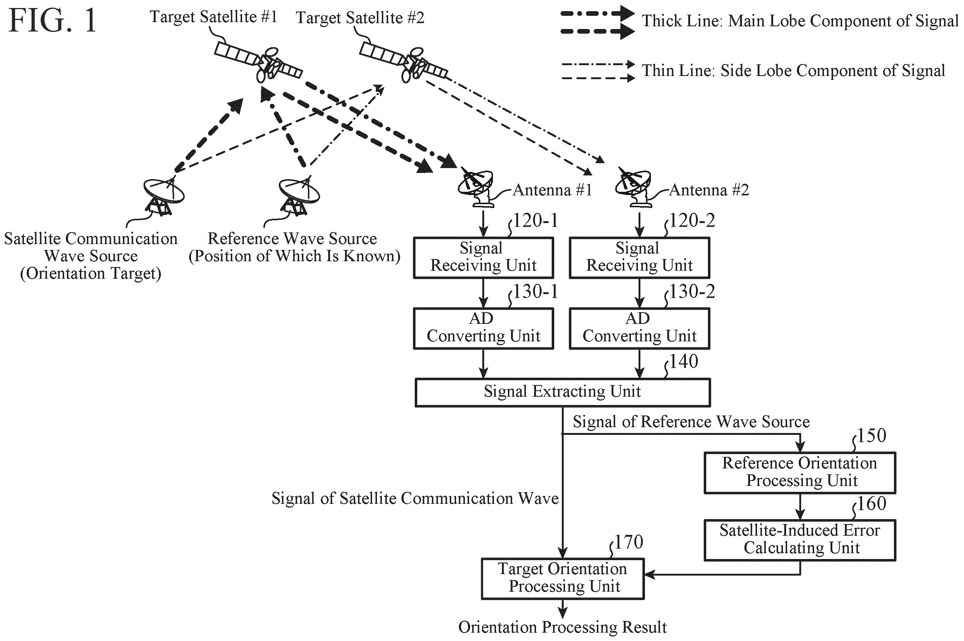

FIG. 1 is a block diagram illustrating a functional configuration of a position orientation device according to a first embodiment. In an upper part of FIG. 1, a schematic diagram of a reception path of signals received by the position orientation device is illustrated. As illustrated in the schematic diagram in the upper part of FIG. 1, the position orientation device receives signals from a "satellite communication wave source (orientation target)" and a "reference wave source (position of which is known)" via two or more satellites. The satellite communication wave source (orientation target) is referred to as a "target" in the specification. In the position orientation device using a DG method, signals received by a plurality of antennas is subjected to frequency conversion and gain adjustment.

As illustrated in FIG. 1, the position orientation device includes signal receiving units 120 (signal receiving units 120-1 and 120-2), AD converting units 130 (AD converting units 130-1 and 130-2), a signal extracting unit 140, a reference orientation processing unit 150, a satellite-induced error calculating unit 160, and a target orientation processing unit 170.

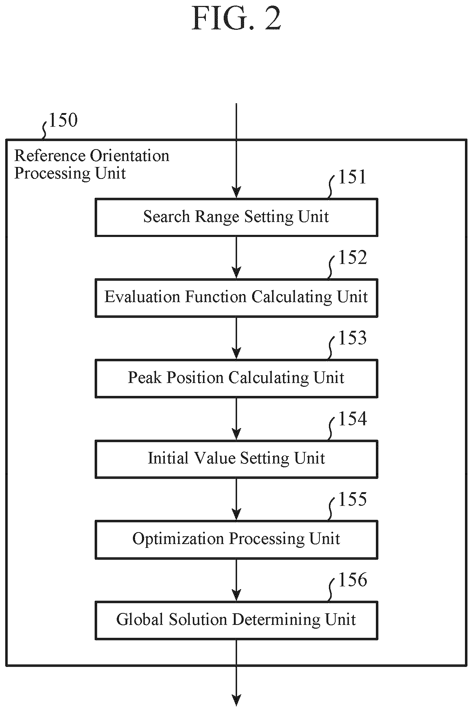

FIG. 2 is a block diagram illustrating a functional configuration of the reference orientation processing unit 150 in the position orientation device according to the first embodiment. As illustrated in FIG. 2, the reference orientation processing unit 150 includes a search range setting unit 151, an evaluation function calculating unit 152, a peak position calculating unit 153, an initial value setting unit 154, an optimization processing unit 155, and a global solution determining unit 156.

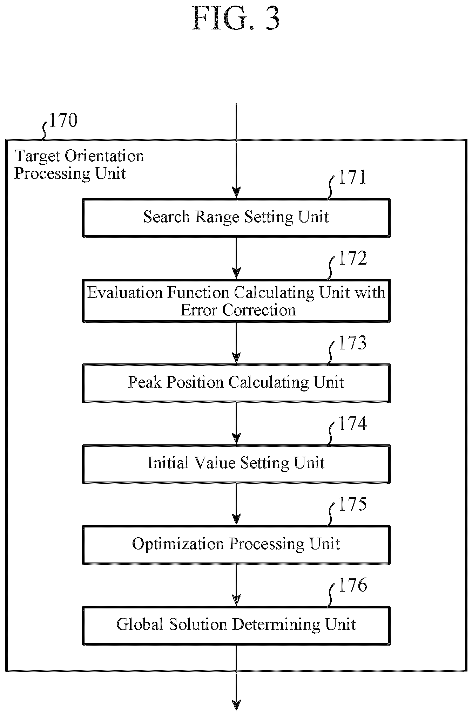

FIG. 3 is a block diagram illustrating a functional configuration of the target orientation processing unit 170 in the position orientation device according to the first embodiment. As illustrated in FIG. 3, the target orientation processing unit 170 includes a search range setting unit 171, an evaluation function calculating unit with error correction 172, a peak position calculating unit 173, an initial value setting unit 174, an optimization processing unit 175, and a global solution determining unit 176.

<<Signal Receiving Unit 120>>

The signal receiving unit 120 is a functional block that receives signals received by antennas (antennas #1, #2, ...) of a ground station and performs signal processing of frequency conversion and gain adjustment. As illustrated in FIG. 1, the signal received by the antenna #1 may be received by the signal receiving unit 120-1, and the signal received by the antenna #2 may be received by the signal receiving unit 120-2.

The signals processed by the signal receiving units 120-1, 120-2, ... are transmitted to the AD converting units 130-1, 130-2, ..., respectively.

<<AD Converting Unit 130>>

The AD converting unit 130 is a functional block for converting an analog signal transmitted from the signal receiving unit 120 into a digital signal.

Specifically, the digital signal converted by the AD converting unit 130 is a baseband signal of a complex number (hereinafter, referred to as a "complex baseband signal"), and is represented as $r^n$ in the present specification. A right superscript n (n = 1, 2, ..., N) is a serial number for distinguishing satellites.

Each of the complex baseband signals is transmitted to the signal extracting unit 140.

<<Signal Extracting Unit 140>>

The signal extracting unit 140 is a functional block for individually extracting a signal component ($r^n_{tar}$) from the target and a signal component ($r^n_{ref}$) from the reference wave source from the complex baseband signal ($r^n$) transmitted from the AD converting unit 130. A right subscript tar of $r^n_{tar}$ representing the signal component from the target is derived from first three characters of "target" in English representing the target. A right subscript ref of $r^n_{ref}$ representing the signal component from the reference wave source is derived from first three characters of "reference" in English representing the reference.

Specifically, the signal extracting unit 140 extracts the signal using a frequency filter.

The signal component ($r^n_{ref}$) from the reference wave source extracted by the signal extracting unit 140 is transmitted to the reference orientation processing unit 150, and the signal component ($r^n_{tar}$) from the target extracted by the signal extracting unit 140 is transmitted to the target orientation processing unit 170.

<<Reference Orientation Processing Unit 150>>

The reference orientation processing unit 150 is a functional block for performing position orientation on the signal component ($r^n_{ref}$) from the reference wave source.

Detailed processing contents of the reference orientation processing unit 150 will be apparent from the following description.

The position information of the reference wave source estimated by the reference orientation processing unit 150 is transmitted to the satellite-induced error calculating unit 160.

<<Satellite-Induced Error Calculating Unit 160>>

The satellite-induced error calculating unit 160 is a functional block for calculating an error component induced by a satellite on the basis of estimated position information of the reference wave source transmitted from the reference orientation processing unit 150 and a true position of the reference wave source. With the presence of the satellite-induced error calculating unit 160, the position orientation device according to the present disclosed technology exerts an effect of reducing the satellite-induced error.

The error component induced by the satellite calculated by the satellite-induced error calculating unit 160 is transmitted to the target orientation processing unit 170.

<<Target Orientation Processing Unit 170>>

The target orientation processing unit 170 is a functional block for performing the position orientation of the target on the basis of the error component induced by the satellite calculated by the satellite-induced error calculating unit 160 and the signal component ($r^n_{tar}$) from the target.

Detailed processing contents of the target orientation processing unit 170 will be apparent from the following description.

<<Processing by Search Range Setting Unit 151 Forming Reference Orientation Processing Unit 150>>

The search range setting unit 151 forming the reference orientation processing unit 150 is a functional block for determining a search width ($d_{wide}$) when searching for a solution that maximizes a value of the evaluation function. Specifically, the search width ($d_{wide}$) is an interval for changing each of a latitude $\theta$ [deg] and a longitude $\phi$ [deg] when searching for the solution that maximizes the value of the evaluation function, that is, a plausible position of the target. In general, when the search width ($d_{wide}$) is narrowed, the accuracy is improved, but a calculation time increases, and when this is widened, the calculation time is shortened, but accuracy is decreased. Therefore, in a generally known numerical solution such as Newton's method, the search width is not constant, and is changed depending on an inclination obtained by partially differentiating the evaluation function with a parameter that is an argument of the evaluation function. In general, many algorithms that improve a convergence speed have been proposed. Furthermore, as a more primitive search method, it is also conceivable to apply a binary search method (binary search) of searching for a solution from a side smaller than the solution and a side larger than the solution. In the position orientation device according to the present disclosed technology, an initial value of the search width ($d_{wide}$) may be set to, for example, about several degrees [deg] to 10 degrees [deg].

Details of a processing step of calculating the solution that maximizes the value of the evaluation function will be apparent from the description of the optimization processing unit 155 to be described later.

The search width ($d_{wide}$) set by the search range setting unit 151 is transmitted to the evaluation function calculating unit 152.

<<Processing by Evaluation Function Calculating Unit 152 Forming Reference Orientation Processing Unit 150>>

The evaluation function calculating unit 152 forming the reference orientation processing unit 150 is a functional block for calculating the value of the evaluation function at intervals of the search width ($d_{wide}$) transmitted from the search range setting unit 151. An evaluation function ($Q(p)$) is expressed by following expression (1).

$$
\begin{aligned}
Q\big(\boldsymbol{p}(\theta,\varphi)\big) \;:=\;& \lambda_{\max}\Big\{\boldsymbol{\Phi}\big(\boldsymbol{p}(\theta,\varphi)\big)\boldsymbol{\Phi}\big(\boldsymbol{p}(\theta,\varphi)\big)^{H}\Big\} \\
=\;& \lambda_{\max}\Big\{\boldsymbol{\Phi}\big(\boldsymbol{p}(\theta,\varphi)\big)^{H}\boldsymbol{\Phi}\big(\boldsymbol{p}(\theta,\varphi)\big)\Big\}
\end{aligned}
\qquad \cdots \quad (1)
$$

Herein, $p(\theta,\phi)$ is a three-dimensional position vector regarding a point on a ground surface at the latitude $\theta$ [deg] and the longitude $\phi$ [deg]. In a right side of expression (1), $\lambda_{\max}\{\}$ represents a function that returns a maximum eigenvalue of a matrix that is an argument. A superscript H in the right side of expression (1) represents Hermitian transposition. The Hermitian transposed matrix is also referred to as an adjoint matrix.

In expression (1), (p of the matrix is given by following expression (2).

$$
\boldsymbol{\Phi}\big(\boldsymbol{p}(\theta,\varphi)\big) \;:=\; [\hat{r}^{1},\; \hat{r}^{2},\; \cdots,\; \hat{r}^{N}] \in \mathbb{C}^{L \times N} \qquad \cdots \quad (2)
$$

Wherein, each of vertical vectors forming the matrix expressed in a right side of expression (2) is given by following expression (3).

$$
\begin{aligned}
&\text{for } n = 1 \text{ to } N \\
&\hat{r}^{n} \;:=\; \big(\boldsymbol{D}^{n}\big(\boldsymbol{p}(\theta,\varphi)\big)\big)^{H} r_{\text{ref}}^{n}
\end{aligned}
\qquad \cdots \quad (3)
$$

A functional matrix $D^{n}$ used in a right side of expression (3) is given by following expression (4).

$$
\boldsymbol{D}^{n}\big(\boldsymbol{p}(\theta,\varphi)\big) \;:=\; \boldsymbol{D}_{f}\big(f_{\boldsymbol{p}(\theta,\varphi)}^{n}\big)\boldsymbol{W}^{H}\boldsymbol{D}_{\tau}\big(\tau_{\boldsymbol{p}(\theta,\varphi)}^{n}\big)\boldsymbol{W} \qquad \cdots \quad (4)
$$

Wherein, $f^{n}_{p}$ and $\tau^{n}_{p}$, which are arguments in a right side of expression (4), are a Doppler frequency and a delay time generated when the signal is received via an n-th satellite when the position of the radio wave source is p. The delay time is a synonymous with time of flight (TOF). $D_{\tau}$ and $D_{f}$ in the right side of expression (4) are given by following expressions (5) and (6), respectively.

$$
\boldsymbol{D}_{\tau}\big(\tau_{\boldsymbol{p}(\theta,\varphi)}^{n}\big) \;=\; \text{diag}\Big\{\exp(0),\; \exp\Big(-j2\pi\tau_{\boldsymbol{p}(\theta,\varphi)}^{n}\tfrac{1}{L}f_{s}\Big),\; \cdots,\; \exp\Big(-j2\pi\tau_{\boldsymbol{p}(\theta,\varphi)}^{n}\tfrac{L-1}{L}f_{s}\Big)\Big\}
$$
$$
\cdots \quad (5)
$$

$$
\boldsymbol{D}_{f}\big(f_{\boldsymbol{p}(\theta,\varphi)}^{n}\big) \;=\; \text{diag}\big\{\exp(0),\; \exp\big(-j2\pi f_{\boldsymbol{p}(\theta,\varphi)}^{n}T_{s}\big),\; \cdots,\; \exp\big(-j2\pi f_{\boldsymbol{p}(\theta,\varphi)}^{n}(L-1)T_{s}\big)\big\}
$$
$$
\cdots \quad (6)
$$

W appearing in the right side of expression (4) represents a matrix used in matrix representation of discrete Fourier transform, and is given by following expression (7).

$$W = \frac{1}{\sqrt{L}}\begin{bmatrix} 1 & 1 & 1 & 1 & \cdots & 1 \\ 1 & w & w^2 & w^3 & \cdots & w^{L-1} \\ 1 & w^2 & w^4 & w^6 & \cdots & w^{2(L-1)} \\ 1 & w^3 & w^6 & w^9 & \cdots & w^{3(L-1)} \\ \vdots & \vdots & \vdots & \vdots & \ddots & \vdots \\ 1 & w^{L-1} & w^{2(L-1)} & w^{3(L-1)} & \cdots & w^{(L-1)(L-1)} \end{bmatrix} \qquad \cdots \quad (7)$$

**wherein** $w = e^{-j\frac{2\pi}{L}}$

W in expression (7) represents a matrix having a size of L $\times$ L and is sometimes referred to as an "L-point DFT matrix" (for example, if L = 8, "8-point DFT matrix") because this is a matrix representation of discrete Fourier transform (DFT) of L points.

The value of the evaluation function calculated by the evaluation function calculating unit 152 is transmitted to the peak position calculating unit 153.

<<Processing by Peak Position Calculating Unit 153 Forming Reference Orientation Processing Unit 150>>

The peak position calculating unit 153 forming the reference orientation processing unit 150 is a functional block for calculating the position vector p with which the value of the evaluation function is an extreme value, that is, the value of the evaluation function is its peak. The position vector p calculated by the peak position calculating unit 153 is expressed by following expression (8).

$$\begin{aligned} p(\theta_M, \varphi_M) &:= \underset{p(\theta,\varphi)}{\mathrm{argmax}}\{Q(p(\theta,\varphi))\} \\ &= \underset{p(\theta,\varphi)}{\mathrm{argmax}}\left[\lambda_{\max}\left\{\Phi(p(\theta,\varphi))^H \Phi(p(\theta,\varphi))\right\}\right] \end{aligned} \qquad \cdots \quad (8)$$

The position vector $p(\theta_M, \phi_M)$ calculated by the peak position calculating unit 153 is transmitted to the initial value setting unit 154.

<<Processing by Initial Value Setting Unit 154 Forming Reference Orientation Processing Unit 150>>

The initial value setting unit 154 forming the reference orientation processing unit 150 is a functional block for setting an initial value regarding optimization processing performed by the optimization processing unit 155 to be described later. Details of the optimization processing performed by the optimization processing unit 155 will be apparent from the following description.

As the initial value set by the initial value setting unit 154, for example, five position vectors including a position vector $p(\theta_M, \phi_M)$ calculated by the peak position calculating unit 153 and the position vectors of four points around the same are used. Specifically, the five position vectors are given by following expression (9).

$$\begin{aligned} &\text{Initial value 1} &:& \quad p(\theta_M, \quad \varphi_M) \\ &\text{Initial value 2} &:& \quad p(\theta_M + \Delta\theta, \quad \varphi_M) \\ &\text{Initial value 3} &:& \quad p(\theta_M, \quad \varphi_M + \Delta\varphi) \qquad \cdots \quad (9) \\ &\text{Initial value 4} &:& \quad p(\theta_M - \Delta\theta, \quad \varphi_M) \\ &\text{Initial value 5} &:& \quad p(\theta_M, \quad \varphi_M - \Delta\varphi) \end{aligned}$$

Herein, absolute values of $\Delta\theta$ and $\Delta\phi$ are made smaller as compared with the search width ($d_{wide}$) used in the search range setting unit 151.

The five initial values set by the initial value setting unit 154 are transmitted to the optimization processing unit 155.

<<Processing by Optimization Processing Unit 155 Forming Reference Orientation Processing Unit 150>>

The optimization processing unit 155 forming the reference orientation processing unit 150 performs calculation of the solution that maximizes the evaluation function (Q(p)), that is, the optimization processing, starting from the initial value transmitted from the initial value setting unit 154.

The position orientation device according to the present disclosed technology includes the optimization processing unit 155 and the optimization processing unit 175 to be described later, thereby exerting an effect that a calculation amount is suppressed as compared with the conventional DG method.

In the optimization processing performed by the optimization processing unit 155, update of a solution candidate is given by following expression (10).

$$\hat{\boldsymbol{p}}_{k+1} \;=\; \hat{\boldsymbol{p}}_k + \Delta \boldsymbol{p}_{m(k)} \qquad \ldots \quad (10)$$

In expression (10), p with hat represents an estimated value of p. In expression (10), subscripts k and k+1 represent the number of times of trial of calculation of the estimated value. In other words, it can be said that expression (10) expresses a relationship between the estimated value of p in a k-th trial and the estimated value of p in a (k+1)-th trial.

A term $\Delta p$ in a right side of expression (10) is synonymous with a term of a gradient vector in a case where expression (10) is seen as an update rule of a steepest descent method.

In a case where the steepest descent method is numerically performed, the term of the gradient vector may be obtained by difference approximation. For example, the optimization processing unit 155 can obtain gradients in the four directions from the five initial values set by the initial value setting unit 154 by difference approximation with reference to the position vector p $(\theta_M,\phi_M)$. In a case where the position vector p is seen on a plane represented by the latitude $\theta$ and the longitude $\phi$, the four directions are expressed by following expression (11).

$$
\begin{aligned}
\Delta \boldsymbol{p}_{m=1} &= (0, \quad \Delta\varphi)^T \\
\Delta \boldsymbol{p}_{m=2} &= (\Delta\theta, \quad 0)^T \\
\Delta \boldsymbol{p}_{m=3} &= (0, \quad -\Delta\varphi)^T \\
\Delta \boldsymbol{p}_{m=4} &= (-\Delta\theta, \quad 0)^T
\end{aligned}
\qquad \ldots \quad (11)
$$

Herein, right superscript T in a right side in expression (11) represents transpose. That is, the position vector p is represented by a vertical vector. As expressed in a left side of expression (11), right subscript m used for $\Delta p$ is an identification number attached to four directions, and has a different meaning from right subscript k used for p.

The term $\Delta p$ in the right side of expression (10) can be given as follows, for example.

$$
\begin{aligned}
\Delta \boldsymbol{p}_{m(k)} \;=\; & \underset{\Delta \boldsymbol{p}_m}{\operatorname{argmax}} \; \boldsymbol{\nabla}_{\Delta \boldsymbol{p}_m} [\lambda_{\max}\{\boldsymbol{\Phi}(\boldsymbol{p}_k)^H \boldsymbol{\Phi}(\boldsymbol{p}_k)\}] \\
& \text{s.t.} \quad \boldsymbol{\nabla}_{\Delta \boldsymbol{p}_m}[\lambda_{\max}\{\boldsymbol{\Phi}(\boldsymbol{p}_k)^H \boldsymbol{\Phi}(\boldsymbol{p}_k)\}] > 0 \;\; (\text{or } \varepsilon)
\end{aligned}
\qquad \ldots \quad (12)
$$

Herein, when a condition of a second row (s.t. and thereafter) of expression (12) is no longer satisfied, the optimization processing, that is, iterative calculation ends. In other words, expression (12) can be said to be a continuation conditional expression of the iterative calculation.

In a case where $\Delta\theta$ and $\Delta\phi$ are made the same value ($d_{narrow}$), a right side of expression (12) can be calculated by a difference approximate expression expressed by following expression (13).

$$
\begin{aligned}
&\boldsymbol{\nabla}_{\Delta \boldsymbol{p}_m}[\lambda_{\max}\{\boldsymbol{\Phi}(\boldsymbol{p}_k)^H \boldsymbol{\Phi}(\boldsymbol{p}_k)\}] \\[2mm]
&\cong \frac{\lambda_{\max}\{\boldsymbol{\Phi}(\boldsymbol{p}_k + \Delta \boldsymbol{p}_m)^H \boldsymbol{\Phi}(\boldsymbol{p}_k + \Delta \boldsymbol{p}_m)\} - \lambda_{\max}\{\boldsymbol{\Phi}(\boldsymbol{p}_k)^H \boldsymbol{\Phi}(\boldsymbol{p}_k)\}}{d_{narrow}}
\end{aligned}
\qquad \ldots \quad (13)
$$

The optimization processing unit 155 repeats updating to solution candidate expressed in expression (10) until the condition of the second row of expression (12) is no longer satisfied. In general, in a case where a solution of a parameter with which a certain evaluation function is an extreme value (local maximum value or local minimum value) is numerically obtained, an end condition of the iterative calculation is that the absolute value of the gradient when the evaluation function is partially differentiated by the parameter is zero, or that the absolute value of the gradient is small enough to be regarded as zero (equal to or smaller than $\varepsilon$, $\varepsilon$ is epsilon used in an epsilon-delta argumentation). The condition of the second row of expression (12) is exactly the synonymous with this.

The estimated value of the plausible position vector p obtained by the optimization processing unit 155 and the value of the evaluation function (Q (estimated value of p)) at that time are transmitted to the global solution determining unit 156 together with the position vector p $(\theta_M,\phi_M)$ before updating and the value of the evaluation function thereof

(Q(p($\theta_M$,$\phi_M$))).

<<Processing by Global Solution Determining Unit 156 Forming Reference Orientation Processing Unit 150>>

The global solution determining unit 156 forming the reference orientation processing unit 150 is a functional block for determining that the estimated value of the plausible position vector p obtained by the optimization processing unit 155 is not a local solution but a properly global solution.

It is generally not easy to obtain a global solution of a non-linear problem. However, in the present technical field, an approximate value of the evaluation function at the time of the position vector p that is a global solution can be empirically known. Therefore, the global solution determining unit 156 can compare an approximate value that the evaluation function in the global solution should be with the value of the evaluation function (Q (estimated value of p)) corresponding to the estimated value of the plausible position vector p transmitted from the optimization processing unit 155, and determine whether the estimated result is the global solution.

When determining whether the estimated result is the global solution, the global solution determining unit 156 may obtain a difference between the value of the evaluation function before the optimization processing and the value of the evaluation function after the optimization processing. The global solution determining unit 156 may compare the difference between the value of the evaluation function before the optimization processing and the value of the evaluation function after the optimization processing with a predetermined threshold. For example, in a case where the difference between the values of the evaluation function before and after the optimization processing is smaller than the threshold, the global solution determining unit 156 may determine that it is a phenomenon that it remains in a local solution that is not the global solution in the iterative calculation of the optimization processing, and perform the processing by the search range setting unit 151 again.

<<Processing by Satellite-Induced Error Calculating Unit 160>>

As described above, the satellite-induced error calculating unit 160 calculates an error component induced by the satellite on the basis of estimated position information of the reference wave source transmitted from the reference orientation processing unit 150 and the true value of the position where the reference wave source is present.

The true value of the position where the reference wave source is present is represented by following mathematical symbols.

$$\boldsymbol{p}_{\text{ref}} \ := \ \boldsymbol{p}(\theta_{\text{ref}}, \ \varphi_{\text{ref}}) \qquad \ldots \quad (1\,4)$$

A right subscript ref appearing in expression (14) is derived from first three characters of "reference" in English representing the reference.

The estimated position information of the reference wave source transmitted from the global solution determining unit 156 of the reference orientation processing unit 150, that is, the estimated value of the position where the reference wave source is present is represented by the following mathematical symbols.

$$\widehat{\boldsymbol{p}}_{\text{ref}} \ := \ \boldsymbol{p}(\hat{\theta}_{\text{ref}}, \ \hat{\varphi}_{\text{ref}}) \qquad \ldots \quad (1\,5)$$

Herein, an accent symbol of hat appearing in expression (15) represents an estimated value.

The satellite-induced error calculating unit 160 calculates values ($\Delta\varepsilon_\tau^n$ and $\Delta\varepsilon_f^n$) expressed by following expressions (16) and (17), respectively.

$$\Delta\varepsilon_\tau^n \ = \ \frac{1}{c}[\{|\widehat{\boldsymbol{p}}_{\text{ref}} - \boldsymbol{p}_s^n| + |\boldsymbol{p}_s^n - \boldsymbol{p}_r|\} - \{|\boldsymbol{p}_{\text{ref}} - \boldsymbol{p}_s^n| + |\boldsymbol{p}_s^n - \boldsymbol{p}_r|\}] \qquad \ldots \quad (1\,6)$$

$$\Delta\varepsilon_f^n \ = \ \frac{1}{c}\left[\left\{\frac{\boldsymbol{v}_s^n(\widehat{\boldsymbol{p}}_{\text{ref}} - \boldsymbol{p}_s^n)}{|\widehat{\boldsymbol{p}}_{\text{ref}} - \boldsymbol{p}_s^n|}f_u + \frac{\boldsymbol{v}_s^n(\widehat{\boldsymbol{p}}_{\text{ref}} - \boldsymbol{p}_r)}{|\widehat{\boldsymbol{p}}_{\text{ref}} - \boldsymbol{p}_r|}f_d\right\} - \left\{\frac{\boldsymbol{v}_s^n(\boldsymbol{p}_{\text{ref}} - \boldsymbol{p}_s^n)}{|\boldsymbol{p}_{\text{ref}} - \boldsymbol{p}_s^n|}f_u + \frac{\boldsymbol{v}_s^n(\boldsymbol{p}_{\text{ref}} - \boldsymbol{p}_r)}{|\boldsymbol{p}_{\text{ref}} - \boldsymbol{p}_r|}f_d\right\}\right] \quad (1\,7)$$

Herein, $\Delta\varepsilon_\tau^n$ in a left side of expression (16) represents a delay time generated in the n-th satellite. Herein, $\Delta\varepsilon_f^n$ in a left side of expression (17) represents frequency displacement generated in the n-th satellite. In expressions (16) and (17), $p_s^n$ and $v_s^n$ represent a position vector and a speed vector of the n-th satellite, respectively. In expressions (16) and (17), $p_r$ represents a position vector of a receiver. In expression (17), $f_u$ represents an uplink frequency of the reference wave source. In expression (17), $f_d$ represents a downlink frequency of the reference wave source.

The satellite-induced error calculating unit 160 calculates values ($\Delta\varepsilon_\tau{}^n$ and $\Delta\varepsilon_f{}^n$) expressed in expressions (16) and (17), respectively, and thereafter calculates values of following matrices ($B_\tau$ and $B_f$).

$$B_\tau(\Delta\varepsilon_\tau^n) \quad := \quad \mathrm{diag}\left\{\exp(0), \quad \exp\left(-j2\pi\Delta\varepsilon_\tau^n\frac{1}{L}f_s\right), \quad \cdots, \quad \exp\left(-j2\pi\Delta\varepsilon_\tau^n\frac{L-1}{L}f_s\right)\right\} \qquad \ldots \quad (18)$$

$$B_f(\Delta\varepsilon_\tau^n) \quad = \quad \mathrm{diag}\{\exp(0), \quad \exp(-j2\pi\Delta\varepsilon_\tau^nT_s), \quad \cdots, \quad \exp(-j2\pi\Delta\varepsilon_\tau^n(L-1)T_s)\} \qquad \ldots \quad (19)$$

Note that, structures of $B_\tau$ and $B_f$ expressed in expressions (18) and (19), respectively, are the same as the structures of $D_\tau$ and $D_f$ expressed in expressions (5) and (6), respectively. In the present specification, in a case where $B_\tau$ and $B_f$ are referred to, an expression of two error matrices is used.

The two error matrices ($B_\tau$ and $B_f$) calculated by the satellite-induced error calculating unit 160 are transmitted to the target orientation processing unit 170.

<<Processing by Search Range Setting Unit 171 Forming Target Orientation Processing Unit 170>>

The processing contents of the search range setting unit 171 forming the target orientation processing unit 170 are the same as those of the search range setting unit 151 forming the reference orientation processing unit 150.

<<Processing by Evaluation Function Calculating Unit with Error Correction 172 Forming Target Orientation Processing Unit 170>>

In the processing performed by the evaluation function calculating unit with error correction 172, the search width ($d_{wide}$) determined by the search range setting unit 151 and the two error matrices ($B_\tau$ and $B_f$) calculated by the satellite-induced error calculating unit 160 are used.

In the processing performed by the evaluation function calculating unit with error correction 172, the evaluation function to be described later is used.

$$\begin{aligned}Q_B\big(p(\theta,\varphi)\big) \quad &:= \quad \lambda_{\max}\left\{\Phi_B\big(p(\theta,\varphi)\big)\Phi_B\big(p(\theta,\varphi)\big)^H\right\} \qquad \ldots \quad (20)\\ &= \quad \lambda_{\max}\left\{\Phi_B\big(p(\theta,\varphi)\big)^H\Phi_B\big(p(\theta,\varphi)\big)\right\}\end{aligned}$$

Herein, $\phi_B$ appearing in a right side of expression (20) is given by the following expression.

$$\Phi_B\big(p(\theta,\varphi)\big) \quad := \quad \left[\hat{r}_B{}^1, \quad \hat{r}_B{}^2, \quad \cdots, \quad \hat{r}_B{}^N\right] \in \mathbb{C}^{L\times N} \qquad \ldots \quad (21)$$

Wherein, each of vertical vectors forming the matrix expressed in a right side of expression (21) is given by following expression (22).

$$\text{for } n = 1 \text{ to } N$$
$$\hat{r}_B{}^n \quad := \quad \left(D_B{}^n\big(p(\theta,\varphi)\big)\right)^H r_{\mathrm{tar}}^n \qquad \ldots \quad (22)$$

A functional matrix $D_B{}^n$ used in a right side of expression (22) is given by following expression (23).

$$D_B{}^n\big(p(\theta,\varphi)\big) \quad := \quad \left[B_f(\Delta\varepsilon_\tau^n)\right]^{-1}D_f\big(f_{p(\theta,\varphi)}^n\big)W^H[B_\tau(\Delta\varepsilon_\tau^n)]^{-1}D_\tau\big(\tau_{p(\theta,\varphi)}^n\big)W. \quad \ldots \quad (23)$$

By using the evaluation function ($Q_B$) defined as described above, it is possible to eliminate the influence of the error component regarding the delay time and the frequency displacement induced by the satellite.

<<Processing by Peak Position Calculating Unit 173 Forming Target Orientation Processing Unit 170>>

The processing contents of the peak position calculating unit 173 forming the target orientation processing unit 170 are the same as those of the peak position calculating unit 153 forming the reference orientation processing unit 150.

<<Processing by Initial Value Setting Unit 174 Forming Target Orientation Processing Unit 170>>

The processing contents of the initial value setting unit 174 forming the target orientation processing unit 170 are the same as those of the initial value setting unit 154 forming the reference orientation processing unit 150.

<<Processing by Optimization Processing Unit 175 Forming Target Orientation Processing Unit 170>>

The processing contents of the optimization processing unit 175 forming the target orientation processing unit 170 are the same as those of the optimization processing unit 155 forming the reference orientation processing unit 150.

<<Processing by Global Solution Determining Unit 176 Forming Target Orientation Processing Unit 170>>

The processing contents of the global solution determining unit 176 forming the target orientation processing unit 170 are the same as those of the global solution determining unit 156 forming the reference orientation processing unit 150.

As illustrated in FIG. 1, an estimated value regarding the target position calculated by the target orientation processing unit 170 is output as an orientation result by the position orientation device.

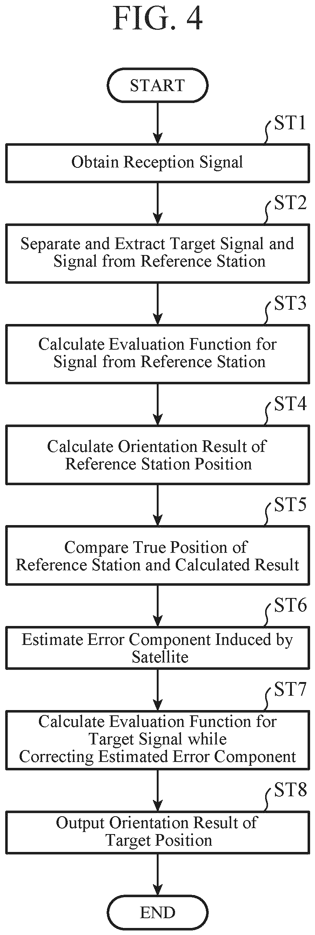

FIG. 4 is a flowchart illustrating an example of a processing step of the position orientation device according to the first embodiment. More specifically, FIG. 4 illustrates an outline of processing steps in a case where the position orientation device according to the first embodiment performs the position orientation on the basis of the HDG method according to the present disclosed technology.

A processing step illustrated as "obtain a reception signal" in FIG. 4 is processing step (ST1) performed by the signal receiving unit 120. As described above, the reception signal received by the signal receiving unit 120 is converted into the complex baseband signal ($r^n$) by the AD converting unit 130.

A processing step illustrated as "separate and extract target signal and signal from reference station" in FIG. 4 is processing step (ST2) performed by the signal extracting unit 140. At this processing step (ST2), the signal extracting unit 140 individually extracts the signal component ($r^n t_{ar}$) from the target and the signal component ($r^n_{ref}$) from the reference wave source from the complex baseband signal ($r^n$) transmitted from the AD converting unit 130.

A processing step illustrated as "calculate evaluation function for signal from reference station" in FIG. 4 is processing step (ST3) performed by the evaluation function calculating unit 152. At this processing step (ST3), the evaluation function calculating unit 152 calculates the value of the evaluation function ($Q(p)$) at an interval of the search width ($d_{wide}$) set by the search range setting unit 151.

A processing step illustrated as "calculate orientation result of reference station position" in FIG. 4 is processing step (ST4) performed by the reference orientation processing unit 150. At this processing step (ST4), the reference orientation processing unit 150 performs the position orientation on the signal component ($r^n_{ref}$) from the reference wave source.

A processing step illustrated as "compare true position of reference station with calculated result" in FIG. 4 is processing step (ST5) performed by the satellite-induced error calculating unit 160. At this processing step (ST5), the satellite-induced error calculating unit 160 compares the estimated value of the position where the reference wave source is present given by expression (15) with the true value of the position where the reference wave source is present given by expression (14).

A processing step illustrated as "estimate error component induced by satellite" in FIG. 4 is processing step (ST6) performed by the satellite-induced error calculating unit 160. At this processing step (ST6), the satellite-induced error calculating unit 160 calculates the values ($\Delta\varepsilon_\tau^n$ and $\Delta\varepsilon_f^n$) given by expressions (16) and (17), respectively, and finally calculates two error matrices ($B_\tau$ and $B_f$).

A processing step illustrated as "calculate evaluation function for target signal while correcting estimated error component" in FIG. 4 is processing step (ST7) performed by the target orientation processing unit 170. At this processing step (ST7), the target orientation processing unit 170 calculates the value of the evaluation function ($Q_B$) defined by expression (20) including the two error matrices ($B_\tau$ and $B_f$).

A processing step illustrated as "output orientation result of target position" in FIG. 4 is processing step (ST8) performed by the target orientation processing unit 170. At this processing step (ST8), the target orientation processing unit 170 performs the position orientation of the target on the basis of the value of the evaluation function ($Q_B$) calculated at ST7 and the signal component ($r^n t_{ar}$) from the target, and outputs the orientation result.

<<Hardware Configuration of Position Orientation Device>>

Among the components forming the position orientation device, the signal extracting unit 140, the reference orientation processing unit 150, the satellite-induced error calculating unit 160, and the target orientation processing unit 170 are implemented by a processing circuit. The processing circuit may be either dedicated hardware or a central processing unit (CPU; also referred to as a central processing device, a processing device, an arithmetic device, a microprocessor, a microcomputer, a processor, or a DSP) that executes a program stored in a memory.

In a case where the processing circuit is the dedicated hardware, the processing circuit corresponds to, for example, a single circuit, a composite circuit, a programmed processor, a parallel-programmed processor, an application specific integrated circuit (ASIC), a field-programmable gate array (FPGA), or a combination of them. Each of the signal extracting unit 140, the reference orientation processing unit 150, the satellite-induced error calculating unit 160, and the target orientation processing unit 170 may be implemented by an individual processing circuit, or functions of the respective units may be collectively implemented by one processing circuit.

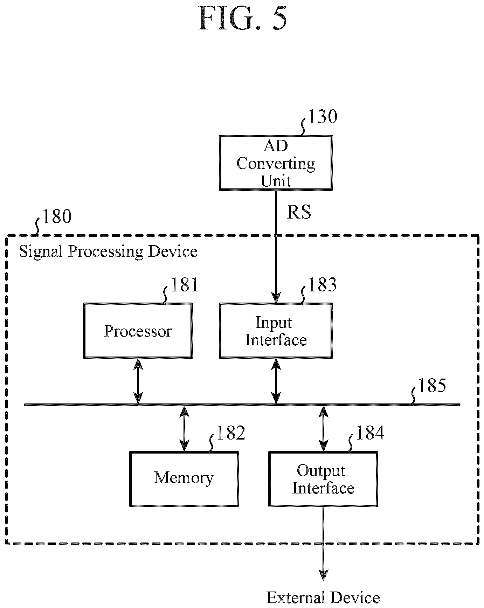

FIG. 5 is a block diagram illustrating an example of a hardware configuration in a case where the processing circuit (signal processing device 180 in FIG. 5) of the position orientation device according to the first embodiment is a CPU. As illustrated in FIG. 5, the signal processing device 180 includes a processor 181, a memory 182, an input interface 183, an output interface 184, and a signal path 185.

The signal path 185 is a bus for connecting the processor 181, the memory 182, the input interface 183, and the output interface 184 to one another.

The input interface 183 transfers the complex baseband signal (represented as "RS" in FIG. 5) transmitted from the AD converting unit 130 to the processor 181 via the signal path 185.

The processor 181 outputs information such as the orientation result to an external display device via the output interface 184.

In a case where the processing circuit is the CPU (the processor 181 in FIG. 5), the functions of the signal extracting unit 140, the reference orientation processing unit 150, the satellite-induced error calculating unit 160, and the target orientation processing unit 170 are implemented by software, firmware, or a combination of software and firmware. The software and firmware are described as a program and stored in the memory 182. The processing circuit implements the functions of the respective units by reading and executing the program stored in the memory 182. That is, the position orientation device includes the memory 182 for storing the program that eventually executes processing steps (ST1 to ST8) illustrated in FIG. 4 when being executed by the processing circuit. It can also be said that these programs cause a computer to execute the procedures and methods performed by the signal extracting unit 140, the reference orientation processing unit 150, the satellite-induced error calculating unit 160, and the target orientation processing unit 170. Here, the memory 182 may be a nonvolatile or volatile semiconductor memory such as a RAM, a ROM, a flash memory, an EPROM, or an EEPROM. The memory 182 may include a disk such as a magnetic disk, a flexible disk, an optical disk, a compact disk, a mini disk, or a DVD. Furthermore, the memory 182 may be an HDD or an SSD.

In a case where the functions of the reference orientation processing unit 150 and the target orientation processing unit 170 are implemented by software, firmware, or a combination of software and firmware, functional blocks having substantially the same function, for example, functional blocks of the peak position calculating unit 153 and the peak position calculating unit 173 may be implemented in such a manner as to be created and called as one function.

Note that, some of the functions of the signal extracting unit 140, the reference orientation processing unit 150, the satellite-induced error calculating unit 160, and the target orientation processing unit 170 may be implemented by dedicated hardware, and the others may be implemented by software or firmware.

FIG. 5 illustrates a hardware configuration using a single processor 181, but the present disclosed technology is not limited thereto. The processing circuit according to the present disclosed technology may have a hardware configuration using a plurality of processors operating in cooperation with each other.

In this manner, the processing circuit can implement the function of each of the signal extracting unit 140, the reference orientation processing unit 150, the satellite-induced error calculating unit 160, and the target orientation processing unit 170 by hardware, software, firmware, or a combination thereof.

As described above, since the position orientation device according to the first embodiment has the above-described configuration, there is an effect that the satellite-induced error is reduced and the calculation amount is reduced to an extent that this is applicable to a signal in an actual environment, as compared with the conventional DG method.

Second Embodiment

A position orientation device according to a second embodiment is a variation of the position orientation device according to the present disclosed technology. Unless otherwise specified, the same reference numerals as those used in the first embodiment are used in the second embodiment. In the second embodiment, the description overlapping with that of the first embodiment is appropriately omitted.

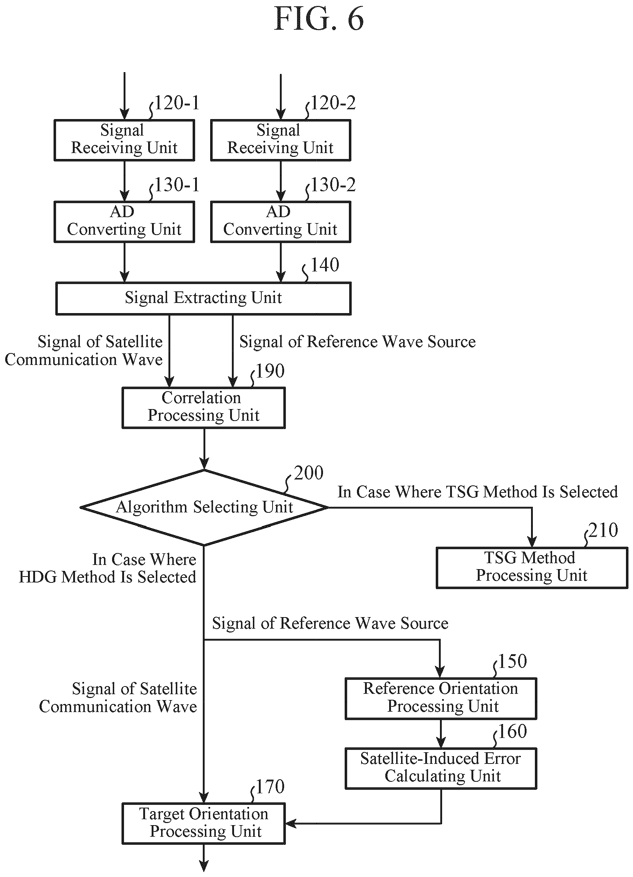

FIG. 6 is a block diagram illustrating a functional configuration of the position orientation device according to the second embodiment. As illustrated in FIG. 6, the position orientation device according to the second embodiment further includes a correlation processing unit 190, an algorithm selecting unit 200, and a TSG method processing unit 210 in addition to the components described in the first embodiment.

The position orientation device according to the second embodiment assumes a case where it is desired to effectively utilize resources such as a program based on the conventional TSG method.

<<Correlation Processing Unit 190>>

The correlation processing unit 190 is a component that performs correlation processing on each of a signal component ($r^n_{tar}$) from a target and a signal component ($r^n_{ref}$) from a reference wave source transmitted from the signal extracting unit 140. Specifically, the correlation processing performed by the correlation processing unit 190 is an operation given by following expression.

$$\mathrm{CF}_{tar}(\tau, \ v) \ = \ \int_{-\frac{T}{2}}^{\frac{T}{2}} r^n_{tar}(t)\{r^m_{tar}(t+\tau)\}^H e^{-j2\pi vt} dt \qquad \ldots \ (24)$$

$$\mathrm{CF}_{ref}(\tau, \ v) \ = \ \int_{-\frac{T}{2}}^{\frac{T}{2}} r^n_{ref}(t)\{r^m_{ref}(t+\tau)\}^H e^{-j2\pi vt} dt \qquad \ldots \ (25)$$

Herein, CF in a left side of each of expressions (24) and (25) is derived from initial letters of "correlation function" in English representing the correlation function. Right superscripts n and m in a right side of each of expressions (24) and (25) represent satellite numbers, respectively, and $n \neq m$ is satisfied. T appearing in an integration section in the right side of each of expressions (24) and (25) represents an observation time.

The correlation processing unit 190 calculates a set of $\tau$ and v that maximizes $\mathrm{CF}_{tar}$ and a set of $\tau$ and v that maximizes $\mathrm{CF}_{ref}$.

$$\begin{aligned} (\tau_{tar}, \ v_{tar}) \ &:= \ \underset{(\tau, \ v)}{\arg\max} \, \mathrm{CF}_{tar}(\tau, \ v) \\ \mathrm{CF}_{tar}(\tau_{tar}, \ v_{tar}) \ &=: \ \mathrm{CF}_{tar\_max} \end{aligned} \qquad \ldots \ (26)$$

$$\begin{aligned} (\tau_{ref}, \ v_{ref}) \ &:= \ \underset{(\tau, \ v)}{\arg\max} \, \mathrm{CF}_{ref}(\tau, \ v) \\ \mathrm{CF}_{ref}(\tau_{ref}, \ v_{ref}) \ &=: \ \mathrm{CF}_{ref\_max} \end{aligned} \qquad \ldots \ (27)$$

A maximum value of $\mathrm{CF}_{tar}$ ($\mathrm{CF}_{tar\_max}$) and a set of $\tau$ and v at that time ($\tau_{tar}$, $v_{tar}$) are transmitted to the algorithm selecting unit 200. A maximum value of $\mathrm{CF}_{ref}$ ($\mathrm{CF}_{ref\_max}$) and a set of $\tau$ and v at that time ($\tau_{ref}$, $v_{ref}$) are also transmitted to the algorithm selecting unit 200.

<<Algorithm Selecting Unit 200>>

The algorithm selecting unit 200 is a component that selects whether the algorithm of the position orientation device is the TSG method according to the conventional technology or the HDG method according to the present disclosed technology on the basis of the information transmitted from the correlation processing unit 190. For example, the algorithm selecting unit 200 selects the algorithm on the basis of the following conditions.

$$\begin{aligned} |\mathrm{CF}_{tar\_max}| \ &\geq \ \varepsilon_{noise} \\ &\cap \ (\mathrm{AND}) \qquad \ldots \ (28) \\ |\mathrm{CF}_{ref\_max}| \ &\geq \ \varepsilon_{noise} \end{aligned}$$

Herein, $\varepsilon_{noize}$ appearing in a right side of conditional expression (28) is a preset threshold.

When the condition of expression (28) is satisfied, the algorithm selecting unit 200 adopts the TSG method as an algorithm for orienting a target position. In this case, the maximum value of $\mathrm{CF}_{tar}$ ($\mathrm{CF}_{tar\_max}$) and a set of $\tau$ and v at that time

$(\tau_{tar}, v_{tar})$ are transmitted to the TSG method processing unit 210. Similarly, the maximum value of $CF_{ref}$ ($CF_{ref\_max}$) and the set of $\tau$ and v at that time ($\tau_{ref}, v_{ref}$) are transmitted to the TSG method processing unit 210.

When the condition of expression (28) is not satisfied, the algorithm selecting unit 200 adopts the HDG method as the algorithm for orienting the target position. In this case, as in the first embodiment, the signal component ($r^n_{ref}$) from the reference wave source is transmitted to the reference orientation processing unit 150, and the signal component ($r^n t_{ar}$) from the target is transmitted to the target orientation processing unit 170.

<<TSG Method Processing Unit 210>>

The TSG method processing unit 210 is a component that orients the target position on the basis of the algorithm of the TSG method on the basis of the information transmitted via the algorithm selecting unit 200. The algorithm of the TSG method used by the TSG method processing unit 210 may be related to the conventional technology.

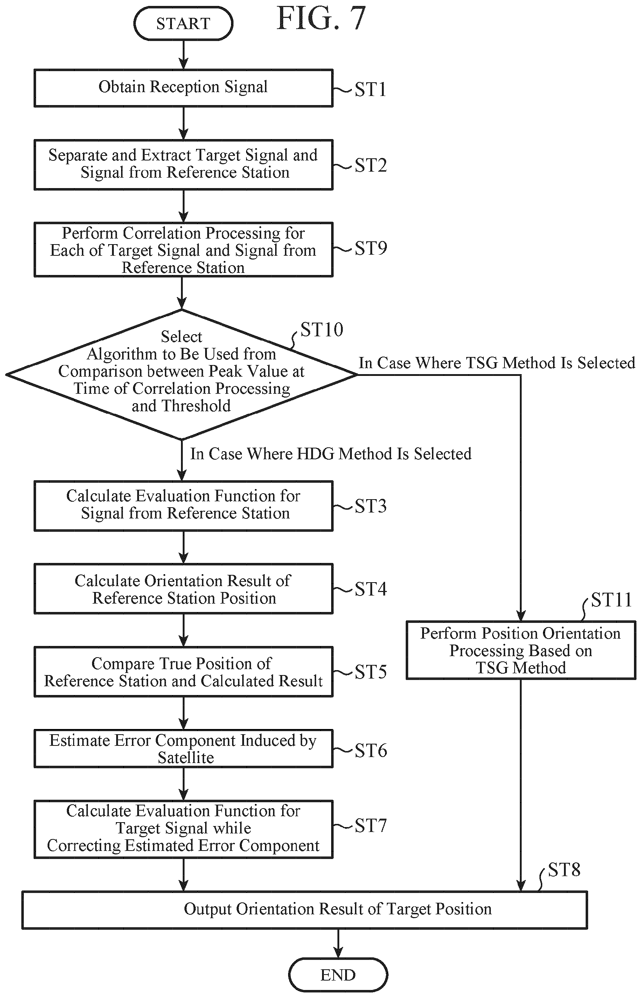

FIG. 7 is a flowchart illustrating an example of a processing step of the position orientation device according to the second embodiment. As illustrated in FIG. 7, the processing steps of the position orientation device according to the second embodiment include ST9 to ST11 in addition to processing steps (ST1 to ST8) described in the first embodiment.

Processing illustrated as "perform correlation processing for each of target signal and signal from reference station" in FIG. 7 is processing step (ST9) performed by the correlation processing unit 190. At this processing step (ST9), the correlation processing unit 190 performs the correlation processing on each of the signal component ($r^n t_{ar}$) from the target and the signal component ($r^n_{ref}$) from the reference wave source.

Processing illustrated as "select algorithm to be used from comparison between peak value at time of correlation processing and threshold" in FIG. 7 is processing step (ST10) performed by the algorithm selecting unit 200. At this processing step (ST10), the algorithm selecting unit 200 selects whether the algorithm of the position orientation device is the TSG method according to the conventional technology or the HDG method according to the present disclosed technology on the basis of conditional expression (28).

Processing illustrated as "perform position orientation processing based on TSG method" in FIG. 7 is processing step (ST11) performed by the TSG method processing unit 210. At this processing step (ST11), the TSG method processing unit 210 orients the target position on the basis of the algorithm of the TSG method.

The components newly appearing in the second embodiment, that is, the correlation processing unit 190, the algorithm selecting unit 200, and the TSG method processing unit 210 are implemented by a processing circuit similarly to the other components. The processing circuit may be dedicated hardware and a CPU that executes a program stored in a memory.

In a case where the processing circuit is the dedicated hardware, the processing circuit corresponds to, for example, a single circuit, a composite circuit, a programmed processor, a parallel-programmed processor, an ASIC, an FPGA, or a combination thereof. Each unit including the correlation processing unit 190, the algorithm selecting unit 200, and the TSG method processing unit 210 may be implemented by an individual processing circuit, or functions of the respective units may be collectively implemented by one processing circuit.

In a case where the processing circuit of the position orientation device according to the second embodiment is the CPU, the hardware configuration is the same as that illustrated in FIG. 5.

In a case where the processing circuit is the CPU (the processor 181 in FIG. 5), the functions of each unit including the correlation processing unit 190, the algorithm selecting unit 200, and the TSG method processing unit 210 are implemented by software, firmware, or a combination of software and firmware. The software and firmware are described as a program and stored in the memory 182. The processing circuit implements the functions of the respective units by reading and executing the program stored in the memory 182. That is, the position orientation device includes the memory 182 for storing the program that eventually executes processing steps (ST1 to ST11) illustrated in FIG. 7 when being executed by the processing circuit. It can also be said that these programs cause a computer to execute the procedures and methods performed by each unit including the correlation processing unit 190, the algorithm selecting unit 200, and the TSG method processing unit 210.

As described above, since the position orientation device according to the second embodiment has the above-described configuration, it is possible to selectively use the TSG method and the HDG method depending on a situation from magnitude of the peak value at the time of correlation processing in addition to the effects described in the first embodiment. With this effect, the position orientation device according to the second embodiment also has an effect of effectively utilizing resources such as a program based on the conventional TSG method.

INDUSTRIAL APPLICABILITY

The position orientation device according to the present disclosed technology can be applied to the fields of radar systems and satellite communication systems, and has industrial applicability.

REFERENCE SIGNS LIST

120: signal receiving unit, 130: AD converting unit, 140: signal extracting unit, 150: reference orientation processing unit, 151: search range setting unit, 152: evaluation function calculating unit, 153: peak position calculating unit, 154: initial value setting unit, 155: optimization processing unit, 156: global solution determining unit, 160: satellite-induced error calculating unit, 170: target orientation processing unit, 171: search range setting unit, 172: evaluation function calculating unit with error correction, 173: peak position calculating unit, 174: initial value setting unit, 175: optimization processing unit, 176: global solution determining unit, 180: signal processing device, 181: processor, 182: memory, 183: input interface, 184: output interface, 185: signal path, 190: correlation processing unit, 200: algorithm selecting unit, 210: TSG method processing unit

**Claims**

1. A position orientation device comprising:

a signal extracting unit to individually extract a signal component from a target and a signal component from a reference wave source from a complex baseband signal;
a reference orientation processing unit to orient a position for the signal component from the reference wave source;
a satellite-induced error calculating unit to calculate an error component induced by a satellite on a basis of estimated position information of the reference wave source and a true value of a position where the reference wave source is present; and
a target orientation processing unit to orient a position of the target on a basis of the error component calculated by the satellite-induced error calculating unit and the signal component from the target.

2. The position orientation device according to claim 1, wherein
the reference orientation processing unit includes:

a search range setting unit to determine a search width when searching for a solution that maximizes a value of an evaluation function;
an evaluation function calculating unit to calculate the value of the evaluation function at an interval of the search width;
a peak position calculating unit to calculate a position vector in which the value of the evaluation function is an extreme value;
an initial value setting unit to set an initial value for optimization processing on a basis of the position vector; and
an optimization processing unit to perform the optimization processing starting from the initial value.

3. The position orientation device according to claim 1, wherein
the target orientation processing unit includes:

a search range setting unit to determine a search width when searching for a solution that maximizes a value of an evaluation function;
an evaluation function calculating unit with error correction to calculate the value of the evaluation function at an interval of the search width with reference to the error component calculated by the satellite-induced error calculating unit;
a peak position calculating unit to calculate a position vector with which the value of the evaluation function is an extreme value;
an initial value setting unit to set an initial value for optimization processing on a basis of the position vector; and
an optimization processing unit to perform the optimization processing starting from the initial value.

4. The position orientation device according to claim 2, wherein

the reference orientation processing unit further includes
a global solution determining unit to determine that the position vector is a global solution.

5. The position orientation device according to claim 3, wherein

the target orientation processing unit further includes
a global solution determining unit to determine that the position vector is a global solution.

6. The position orientation device according to claim 1, further comprising:

a correlation processing unit to perform correlation processing on each of the signal component from the target and the signal component from the reference wave source;
an algorithm selecting unit to select an algorithm of either a TSG method or a HDG method on a basis of information transmitted from the correlation processing unit; and
a TSG method processing unit to orient a target position by the TSG method in a case where the algorithm is selected as the TSG method.

# FIG. 1

Target Satellite #1   Target Satellite #2

Thick Line: Main Lobe Component of Signal

Thin Line: Side Lobe Component of Signal

Satellite Communication
Wave Source
(Orientation Target)

Reference Wave Source
(Position of Which Is Known)

Antenna #1

Antenna #2

120-1
Signal
Receiving Unit

120-2
Signal
Receiving Unit

130-1
AD
Converting Unit

130-2
AD
Converting Unit

140
Signal Extracting Unit

Signal of Reference Wave Source

150
Reference Orientation
Processing Unit

Signal of Satellite Communication Wave

160
Satellite-Induced Error
Calculating Unit

170
Target Orientation
Processing Unit

Orientation Processing Result

EP 4 474 871 A1

# FIG. 2

150

Reference Orientation
Processing Unit

151

| Search Range Setting Unit |
| --- |

152

| Evaluation Function Calculating Unit |
| --- |

153

| Peak Position Calculating Unit |
| --- |

154

| Initial Value Setting Unit |
| --- |

155

| Optimization Processing Unit |
| --- |

156

| Global Solution Determining Unit |
| --- |

# FIG. 3

**170**
Target Orientation
Processing Unit

**171**
Search Range Setting Unit

**172**
Evaluation Function Calculating Unit with Error Correction

**173**
Peak Position Calculating Unit

**174**
Initial Value Setting Unit

**175**
Optimization Processing Unit

**176**
Global Solution Determining Unit

# FIG. 4

START

ST1
Obtain Reception Signal

ST2
Separate and Extract Target Signal and
Signal from Reference Station

ST3
Calculate Evaluation Function for
Signal from Reference Station

ST4
Calculate Orientation Result of
Reference Station Position

ST5
Compare True Position of
Reference Station and Calculated Result

ST6
Estimate Error Component Induced by
Satellite

ST7
Calculate Evaluation Function for
Target Signal while
Correcting Estimated Error Component

ST8
Output Orientation Result of
Target Position

END

FIG. 5

130

AD
Converting
Unit

RS

180

Signal Processing Device

181

Processor

183

Input
Interface

185

182

Memory

184

Output
Interface

External Device

# FIG. 6

```
        120-1                      120-2
   ┌──────────────┐          ┌──────────────┐
   │    Signal    │          │    Signal    │
   │Receiving Unit│          │Receiving Unit│
   └──────────────┘          └──────────────┘
          │                         │
        130-1                      130-2
   ┌──────────────┐          ┌──────────────┐
   │      AD      │          │      AD      │
   │Converting Unit│         │Converting Unit│
   └──────────────┘          └──────────────┘
          │                         │
          │                        140
          │     ┌─────────────────────────────┐
          └────►│   Signal Extracting Unit     │
                └─────────────────────────────┘
```

Signal of Satellite          Signal of Reference Wave Source
Communication Wave

190

```
          ┌──────────────────┐
          │    Correlation   │
          │  Processing Unit │
          └──────────────────┘
                   │
                  200
            ◇ Algorithm Selecting Unit ◇ ──── In Case Where TSG Method Is Selected
```

In Case Where TSG Method Is Selected

210

```
                              ┌──────────────────┐
                              │    TSG Method     │
                              │ Processing Unit   │
                              └──────────────────┘
```

In Case Where
HDG Method Is Selected

Signal of Reference Wave Source

150

```
                              ┌──────────────────────┐
Signal of Satellite           │ Reference Orientation │
Communication Wave            │   Processing Unit     │
                              └──────────────────────┘
```

160

```
                              ┌──────────────────────┐
                              │ Satellite-Induced Error│
                              │   Calculating Unit     │
                              └──────────────────────┘
```

170

```
          ┌──────────────────┐
          │ Target Orientation│
          │  Processing Unit  │
          └──────────────────┘
```

# FIG. 7

START

Obtain Reception Signal ~ST1

Separate and Extract Target Signal and Signal from Reference Station ~ST2

Perform Correlation Processing for Each of Target Signal and Signal from Reference Station ~ST9

Select Algorithm to Be Used from Comparison between Peak Value at Time of Correlation Processing and Threshold — ST10

In Case Where TSG Method Is Selected

In Case Where HDG Method Is Selected

Calculate Evaluation Function for Signal from Reference Station ~ST3

Calculate Orientation Result of Reference Station Position ~ST4

Compare True Position of Reference Station and Calculated Result ~ST5

Estimate Error Component Induced by Satellite ~ST6

Calculate Evaluation Function for Target Signal while Correcting Estimated Error Component ~ST7

Perform Position Orientation Processing Based on TSG Method — ST11

Output Orientation Result of Target Position — ST8

END

## INTERNATIONAL SEARCH REPORT

| International application No. |
|---|
| **PCT/JP2022/019217** |

**A. CLASSIFICATION OF SUBJECT MATTER**

*G01S 19/07*(2010.01)i; *G01S 5/14*(2006.01)i
FI: G01S5/14; G01S19/07

According to International Patent Classification (IPC) or to both national classification and IPC

**B. FIELDS SEARCHED**

Minimum documentation searched (classification system followed by classification symbols)

G01S5/00-5/14; G01S19/00-19/55

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-198435 A (MITSUBISHI ELECTRIC CORP.) 03 September 2009 (2009-09-03) entire text, all drawings | 1-6 |
| A | JP 2000-501504 A (SYMMETRICOM, INC.) 08 February 2000 (2000-02-08) entire text, all drawings | 1-6 |
| A | JP 2000-512380 A (THE SECRETARY OF STATE FOR DEFENCE IN HER BRITANNIC MAJESTY'S GOVERNMENT OF THE UNITED KINGDOM OF GREAT BRITAIN AND NORTHERN IRELAND) 19 September 2000 (2000-09-19) entire text, all drawings | 1-6 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 May 2022** | **05 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/019217**

| Patent document cited in search report | | | Publication date (day/month/year) | Patent family member(s) | | | Publication date (day/month/year) |
|---|---|---|---|---|---|---|---|
| JP | 2009-198435 | A | 03 September 2009 | (Family: none) | | | |
| JP | 2000-501504 | A | 08 February 2000 | US entire text, all drawings | 6128501 | A | |
| JP | 2000-512380 | A | 19 September 2000 | US entire text, all drawings | 6018312 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WEISS, A.** ; **AMAR, A.** Direct Geolocation of Stationary Wide Band Radio Signal Based on Delays and Doppler Shifts. *IEEE Workshop on Statistical Signal Processing*, 31 August 2009